(19) Europäisches Patentamt / European Patent Office / Office européen des brevets

(11) **EP 4 614 587 A1**

(12) **EUROPEAN PATENT APPLICATION**
published in accordance with Art. 153(4) EPC

(43) Date of publication:
**10.09.2025 Bulletin 2025/37**

(21) Application number: **23888824.2**

(22) Date of filing: **16.05.2023**

(51) International Patent Classification (IPC):
$H01M\ 4/133^{(2010.01)}$ $\qquad$ $H01M\ 4/36^{(2006.01)}$
$H01M\ 4/583^{(2010.01)}$ $\qquad$ $H01M\ 10/052^{(2010.01)}$
$H01M\ 4/02^{(2006.01)}$

(52) Cooperative Patent Classification (CPC):
**H01M 4/02; H01M 4/133; H01M 4/36; H01M 4/583; H01M 10/052; Y02E 60/10**

(86) International application number:
**PCT/KR2023/006599**

(87) International publication number:
**WO 2024/101555 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.11.2022 KR 20220148813**

(71) Applicants:
• **SK On Co., Ltd.**
  **Seoul 03161 (KR)**
• **SK innovation Co., Ltd.**
  **Seoul 03188 (KR)**

(72) Inventors:
• **JEON, Chan Young**
  **Daejeon 34124 (KR)**
• **PARK, So Hyun**
  **Daejeon 34124 (KR)**
• **LEE, Jong Hyuk**
  **Daejeon 34124 (KR)**
• **KIM, Kyung Hoon**
  **Daejeon 34124 (KR)**
• **CHOI, Wan Uk**
  **Daejeon 34124 (KR)**

(74) Representative: **Prüfer & Partner mbB**
**Patentanwälte · Rechtsanwälte**
**Sohnckestraße 12**
**81479 München (DE)**

(54) **ANODE FOR LITHIUM SECONDARY BATTERY AND LITHIUM SECONDARY BATTERY COMPRISING SAME**

(57) An anode for a lithium secondary battery according to exemplary embodiments may include an anode current collector, and an anode active material layer formed on the anode current collector and including an anode active material. The anode active material layer may have a preferred orientation (P/O) factor, as determined by the March-Dollase approach, of less than 0.67. Therefore, the lithium secondary battery may have high stability and cycle characteristics, and may provide high energy density and high output characteristics.

[FIG. 1]

EP 4 614 587 A1

**Description**

[Technical Field]

The present disclosure relates to an anode for a lithium secondary battery and a lithium secondary battery. More specifically, the present disclosure relates to an anode for a lithium secondary battery, which includes active material particles, and a lithium secondary battery including the anode.

[Background Art]

A secondary battery is a battery that can be repeatedly charged and discharged, and is widely applied as a power source for portable electronic communication devices such as camcorders, mobile phones, and laptop computers with the advancement of information and communication technology and display industries. In addition, a battery pack including a secondary battery has been developed and applied as a power source for an eco-friendly vehicle such as a hybrid vehicle.

Examples of the secondary battery may include a lithium secondary battery, a nickelcadmium battery, a nickel-hydrogen battery and the like. In particular, when applying the lithium secondary battery to a hybrid vehicle, it is advantageous in terms of a charging speed and light weight due to a high operating voltage and a high energy density per unit weight.

The lithium secondary battery may include: an electrode assembly including a cathode, an anode, and a separation membrane (separator); and an electrolyte in which the electrode assembly is impregnated. In addition, the lithium secondary battery may further include, for example, a pouch-type outer case in which the electrode assembly and the electrolyte are housed.

For example, the anode may include active material particles such as carbon-based particles or silicon-based particles. However, when charging and discharging are repeatedly performed in the lithium secondary battery, the active material particles undergo shrinkage and expansion, resulting in deterioration in contact between the particles and the occurrence of short circuit problems. When the composition and structure of the anode active material are changed to improve the stability of the anode, the output and cycle life of the secondary battery may be reduced.

Therefore, it is necessary to develop an anode that can ensure cycle life stability and output/capacity characteristics. For example, Korean Patent Laid-Open Publication No. 10-2017-0099748 discloses an electrode assembly for a lithium secondary battery and a lithium secondary battery including the same.

[Summary of Invention]

[Problems to be Solved by Invention]

An object of the present disclosure is to provide an anode for a lithium secondary battery having improved stability and electrical characteristics.

Another object of the present disclosure is to provide a lithium secondary battery having improved stability and electrical characteristics.

[Means for Solving Problems]

An anode for a lithium secondary battery according to exemplary embodiments may include: an anode current collector; and an anode active material layer formed on the anode current collector and including an anode active material.

According to exemplary embodiments, the anode active material layer may have a preferred orientation (P/O) factor, as determined by the March-Dollase approach, of less than 0.67.

In some embodiments, the preferred orientation factor of the anode active material layer may be 0.30 to 0.64.

In some embodiments, the preferred orientation factor of the anode active material layer may be calculated as 1 - (minus) an orientation factor (r). The orientation factor (r) may be obtained by Equation 1 below:

[Equation 1]

$$P_k = \left( r^2 \cos^2 \alpha + \frac{1}{r} \sin^2 \alpha \right)^{-3/2}$$

In Equation 1 above, r may be the orientation factor, $\alpha$ may be a diffraction angle of X-rays for the anode active material layer measured by X-ray diffraction analysis (XRD), and $P_k$ may be a value obtained by Equation 2 below.
[Equation 2]

$$Y_{ci} = S\sum_k L_k |F_k|^2 \emptyset(2\theta - 2\theta_k)P_k A + Y_{bi}$$

In Equation 2 above, $\theta$ may be an incident angle of the X-ray at which the diffraction angle $\alpha$ appears, $\theta_k$ may be a reflection angle of the X-ray incident at the angle of $\theta$.

$Y_{ci}$ may be a diffraction intensity at $2\theta$ calculated by the Rietveld refinement method using the X-ray diffraction profile of the anode active material layer.

$Y_{bi}$ may be a background intensity.

S may be a scale factor, $L_k$ may be a Lorenz factor, and $F_k$ may be a structure factor.

$\emptyset$ may be a reflection intensity of the X-ray at $2\theta$ measured by XRD for the anode active material layer, and A may be an absorption factor.

In some embodiments, the preferred orientation plane of the anode active material layer may be a crystal plane corresponding to a c-axis direction of the anode active material.

According to exemplary embodiments, the anode active material may include artificial graphite, natural graphite or a mixture thereof.

In some embodiments, the anode active material may include single particles.

In some embodiments, the anode active material may include assembled particles in which a plurality of primary particles are aggregated.

In some embodiments, the anode active material may include single particles and assembled particles in which a plurality of primary particles are aggregated.

In one embodiment, the anode active material may have a bi-modal distribution.

In one embodiment, the single particles may have a median particle diameter of 7 $\mu$m to 15 $\mu$m, and the assembled particles may have a median particle diameter of 10 $\mu$m to 20 $\mu$m.

In one embodiment, a ratio of a content of the assembled particles to a content of the single particles may be 0.5 to 4.

In some embodiments, the anode active material may include a core and a carbon coating formed on the core.

In one embodiment, a content of the carbon coating may be 0.5% by weight to 10% by weight based on a total weight of the anode active material.

According to exemplary embodiments, the anode active material layer may include pores formed between anode active material particles. In one embodiment, a pore volume of the anode active material layer may be 0.15 ml/g to 0.30 ml/g.

A lithium secondary battery according to exemplary embodiments may include: the above-described anode for a lithium secondary battery; and a cathode disposed opposite to the anode for the lithium secondary battery.

[Advantageous effects]

The anode for a lithium secondary battery according to exemplary embodiments may include an anode active material layer formed on an anode current collector. The preferred orientation factor (P/O) of the anode active material layer, as determined by the March-Dollase approach, may fall within a predetermined range. Accordingly, the degree of orientation and the orientation direction of active material particles in the anode active material layer may be adjusted within a predetermined range.

For example, crystals having an isotropic structure and crystals having an anisotropic structure may appropriately coexist in the anode active material layer. Accordingly, the volume expansion of the anode during charging and discharging may be suppressed, and the cycle life characteristics, high-temperature stability, and output characteristics may be simultaneously improved.

The anode active material may include artificial graphite or natural graphite. Therefore, the cycle life characteristics and high-temperature operational stability of the secondary battery may be improved. In addition, the anode active material may further include a carbon coating. Therefore, the strength of the anode active material may be increased, and the volume expansion may be suppressed, thereby further improving the cycle characteristics and structural stability.

Pores may be formed within the anode active material layer. Therefore, the volume expansion of the anode active material during charging and discharging may be further mitigated, and the occurrence of cracks and short circuits in the anode active material layer may be suppressed.

[Brief Description of Drawings]

FIG. 1 is a schematic plan view illustrating a secondary battery according to exemplary embodiments.
FIG. 2 is a schematic cross-sectional view illustrating an electrode assembly according to exemplary embodiments.

[Mode for Carrying out Invention]

An anode for a lithium secondary battery (hereinafter, also abbreviated as an anode) according to the embodiments of the present disclosure may include an anode current collector, and an anode active material layer formed on the anode current collector.

In addition, the lithium secondary battery according to the embodiments of the present disclosure may include the above-described anode for a lithium secondary battery.

Hereinafter, the anode for a lithium secondary battery and the lithium secondary battery according to the embodiments of the present disclosure will be described in detail with reference to the accompanying drawings. However, these embodiments are merely examples, and the present disclosure is not limited to the specific embodiments described as examples.

**<Anode for a lithium secondary battery>**

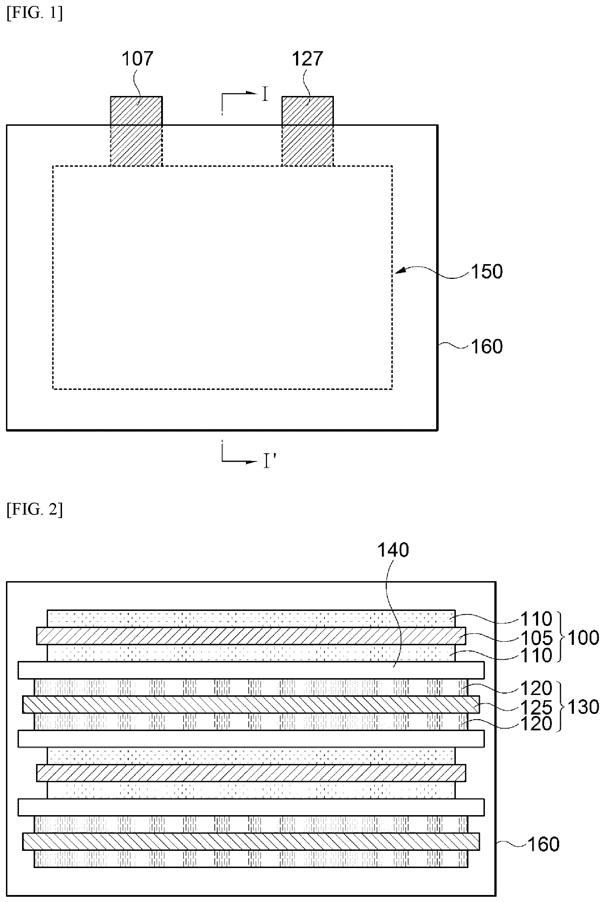

FIGS. 1 and 2 are schematic plan and cross-sectional views of a lithium secondary battery according to exemplary embodiments, respectively. For example, FIG. 2 is a cross-sectional view taken on line I-I' shown in FIG. 1 in a thickness direction of the lithium secondary battery.

Meanwhile, for the convenience of description, a cathode and an anode are not illustrated in FIG. 1.

Referring to FIGS. 1 and 2, the secondary battery may be provided as a lithium secondary battery. The secondary battery may include an electrode assembly 150 and a case 160 in which the electrode assembly 150 is housed. The electrode assembly 150 may include a cathode 100, an anode 130 and a separation membrane 140.

The anode 130 may include an anode current collector 125 and an anode active material layer 120 formed on at least one surface of the anode current collector 125.

According to exemplary embodiments, the anode active material layer 120 may be formed on both surfaces (e.g., upper and lower surfaces) of the anode current collector 125. The anode active material layer 120 may be coated on each of the upper surface and the lower surface of the anode current collector 125. For example, the anode active material layer 120 may be in direct contact with the surface of the anode current collector 125.

The anode current collector 125 may include gold, stainless steel, nickel, aluminum, titanium, copper, or an alloy thereof, and preferably includes copper or a copper alloy.

The anode active material layer 120 may include an anode active material. Within the anode active material layer 120, crystal structures in which the anode active materials are oriented in a predetermined direction may be formed.

According to exemplary embodiments, the anode active material layer 120 may have a preferred orientation (P/O) factor, as determined by the March-Dollase approach, of less than 0.67.

The preferred orientation factor may be a value indicating the degree to which the crystal structure of the anode active material layer 120 is oriented along a specific crystal plane. For example, when the preferred orientation factor is high, the orientation of the anode active material layer 120 with respect to the specific crystal plane may also be high.

The preferred orientation factor may be determined by the March-Dollase approach using X-ray diffraction analysis. For example, the preferred orientation factor may be calculated from the scattering vector and diffraction peaks obtained by performing X-ray diffraction analysis on the surface or cross-section of the anode active material layer 120.

As the preferred orientation factor increases, the crystals in the anode active material layer 120 may be oriented along the specific crystal plane. When the crystal structures exhibit a high degree of orientation, the anode may expand in the direction of the corresponding crystal plane during charging and discharging. Therefore, the stress caused by the volume change may be excessively applied to the anode 130, and the cycle life characteristics and structural stability may be degraded.

In addition, the energy density of the lithium secondary battery may be reduced due to the volume expansion of the anode 130, and the charge and discharge capacities and output characteristics may be degraded.

According to exemplary embodiments, since the anode active material layer 120 has a preferred orientation factor of less than 0.67, the degree of crystal orientation in the anode active material layer 120 may be reduced. Accordingly, volume expansion of the anode active material layer 120 may be suppressed, and cycle characteristics and stability may be improved.

In some embodiments, the anode active material layer 120 may have a preferred orientation factor of 0.30 to 0.67, for example, 0.35 to 0.64, or 0.39 to 0.61.

For example, the higher the preferred orientation factor, the more the crystals in the anode active material layer 120 may exhibit preferred orientation, for example, an anisotropic structure. In addition, the lower the preferred orientation factor, the more the crystals in the anode active material layer 120 may exhibit an isotropic structure.

When the preferred orientation factor of the anode active material layer 120 falls within the above range, isotropic crystal regions and anisotropic crystal regions may appropriately coexist within the anode active material layer 120. Accordingly, cycle performance and high-temperature storage performance may be improved due to the anisotropic structure within the anode active material layer 120, and initial energy density and output characteristics may be enhanced due to the isotropic structure.

For example, if the preferred orientation factor of the anode active material layer 120 is less than 0.30, the initial pore volume of the anode active material layer 120 may increase, which may lead to relatively lower energy density and a reduction in structural stability of the anode active material layer 120.

In some embodiments, the preferred orientation factor (P/O) of the anode active material layer 120 may be calculated as 1 - (minus) an orientation factor (r).

For example, the orientation factor (r) may be obtained by Equation 1 below.

[Equation 1]

$$P_k = (r^2\cos^2\alpha + \frac{1}{r}\sin^2\alpha)^{-3/2}$$

In Equation 1 above, r is the orientation factor.

$\alpha$ may be a diffraction angle of X-rays for the anode active material layer 120, measured by X-ray diffraction analysis (XRD). For example, $\alpha$ may be an angle formed between the X-ray scattering vector and a direction perpendicular to a measurement plane of the anode active material layer 120. In one embodiment, the X-rays may be irradiated in a direction perpendicular to the measurement plane of the anode active material layer 120. For example, the incident angle of the X-rays may be 90°.

$P_k$ may be calculated by Equation 2 below.

[Equation 2]

$$Y_{ci} = S\sum_k L_k |F_k|^2 \emptyset(2\theta - 2\theta_k)P_k A + Y_{bi}$$

In Equation 2 above, $\theta$ may be an incident angle of the X-ray at which the diffraction angle $\alpha$ appears. For example, $\theta$ may be an angle formed between the measurement plane of the anode active material layer 120 and the X-ray. $\theta_k$ may be a reflection angle of the X-ray incident at the angle of $\theta$.

$Y_{ci}$ is an intensity of the diffracted X-ray calculated by the Rietveld refinement method. For example, the diffraction profile of the anode active material layer 120 obtained by XRD may be calculated by the Rietveld refinement method to obtain the X-ray diffraction intensity at the diffraction peak i. The diffraction peak i may be a peak appearing at $2\theta$ in the XRD profile of the anode active material layer 120.

For example, a diffraction pattern may be measured at $2\theta$ steps of 0.01° to 0.05° for the anode active material layer, and $Y_{ci}$ may be determined using the measured diffraction pattern and a pattern calculated from the internal crystal structure of the anode active material layer 120.

In one embodiment, a difference between the measured diffraction pattern and the calculated pattern may be iteratively calculated using the least-square method. For example, $Y_{ci}$ may be calculated by Equation 3 below.

[Equation 3]

$$Sy = \sum_i \frac{(Y_i - Y_{ci})^2}{Y_i}$$

In Equation 3 above, Yi is the diffraction intensity measured at diffraction peak i, and $Y_{ci}$ is the diffraction intensity at diffraction peak i calculated from the internal crystal structure. Equation 3 above may be repeatedly calculated to minimize the Sy value, and $Y_{ci}$ may be finally calculated.

In Equation 2 above, Ø may be a reflection intensity of X-ray at $2\theta$ measured by XRD for the anode active material layer 120. For example, Ø may be the reflection intensity of X-ray at 2θ obtained from the reflection profile of the anode active material layer 120 acquired by XRD.

$Y_{bi}$ is a background intensity of the anode active material layer. For example, $Y_{bi}$ is the X-ray intensity at 2θ derived from the background other than the anode active material layer 120.

S is a scale factor, $L_k$ is a Lorenz factor, $F_k$ is a structure factor, and A is an absorption factor. S, $L_k$, $F_k$ and A may be correction factors for the diffraction pattern, and may be physical properties measured from the anode active material layer 120.

In one embodiment, S, $L_k$, $F_k$ and A may be values estimated or calculated by the Rietveld refinement method using X-ray diffraction software. For example, S, $L_k$, $F_k$ and A may be calculated by performing the Rietveld refinement method using "Highscore Plus" from Malvern Panalytical on the measured values obtained from the anode active material layer 120.

In one embodiment, $L_k$ and $F_k$ may be calculated values when the reflection angle of the X-ray incident at the angle of θ is $θ_k$, and a function or value of $P_k$ may be derived therefrom.

The orientation plane may refer to a plane (e.g., a crystal plane) along which crystals are oriented. When the anode active materials in the anode active material layer 120 are preferentially oriented or grown along a specific crystal plane, the preferred orientation plane (H) may refer to the corresponding crystal plane. For example, the preferred orientation plane (H) may refer to a crystal plane that is most predominantly present among the crystal planes in the anode active material layer 120.

In one embodiment, the preferred orientation plane of the anode active material layer 120 may be a crystal plane corresponding to a c-axis direction of the anode active material. For example, when the anode active material layer 120 includes natural graphite or artificial graphite as the anode active material, the preferred orientation plane (H) of the anode active material layer 120 may be 002, 004, 006 plane or the like.

For example, the preferred orientation of the anode active material layer 120 may occur at the (004) plane near 2θ = 53.5° to 56.0°.

In some embodiments, the preferred orientation (P/O) factor of the anode active material layer 120 may be measured in the out-of-plane direction of the anode active material layer 120. For example, the preferred orientation factor may be measured by performing X-ray diffraction analysis on the upper surface of the anode active material layer 120.

In some embodiments, the preferred orientation (P/O) factor of the anode active material layer 120 may be measured in the in-plane direction of the anode active material layer 120. For example, the preferred orientation factor may be measured by performing X-ray diffraction analysis on the in-plane of the anode active material layer 120.

In some embodiments, both the out-of-plane and in-plane of the anode active material layer 120 may have a preferred orientation (P/O) factor within the above-described range. For example, both the preferred orientation (P/O) factor measured by X-ray diffraction analysis on the upper surface of the anode active material layer 120 and the preferred orientation (P/O) factor measured by X-ray diffraction analysis on the in-plane of the anode active material layer 120 may be in the range of 0.30 to 0.64.

When the anode active material layer 120 has the preferred orientation (P/O) factor within the above-described range in both the out-of-plane and in-plane directions, the overall structural stability and volume expansion suppression ability of the anode active material layer 120 may be further enhanced. Accordingly, the cycle characteristics and high-temperature stability of the lithium secondary battery may be further improved.

In some embodiments, the out-of-plane and in-plane directions of the anode active material layer 120 may have different preferred orientation planes (H). For example, when the preferred orientation plane at the out-of-plane of the anode active material layer 120 is the (004) plane, the preferred orientation plane in the in-plane direction may be the (110) plane.

According to exemplary embodiments, the anode active material may include artificial graphite, natural graphite, or a mixture thereof. Artificial graphite and natural graphite may have high heat resistance and stability, thereby further improving the cycle life characteristics and high-temperature operational stability of the secondary battery.

In some embodiments, the anode active material may include artificial graphite. Artificial graphite may have relatively higher chemical and thermal stability than natural graphite. Therefore, by employing artificial graphite, the high-temperature storage or high-temperature cycle life characteristics of the secondary battery may be further improved.

In some embodiments, the anode active material may further include a carbon coating. For example, the anode active material may include active material particles including a core and a carbon coating formed on the core. The core is a portion that provides anode activity, and may include, for example, artificial graphite or natural graphite.

The strength of the anode active material particles may be further increased due to the carbon coating, and volume expansion may be suppressed. Therefore, crack generation in the anode active material particles caused by stress may be further suppressed, and the volume change of the anode active material layer may be reduced, thereby further improving the energy density.

In one embodiment, a content of the carbon coating may be 0.5% by weight ("wt%") to 10 wt% based on the total weight of the anode active material. Within the above range, the cycle characteristics and high-temperature stability of the lithium secondary battery may be further improved without deteriorating the anode activity.

For example, the content of the carbon coating may be 0.5 wt% to 6 wt% based on the total weight of the anode active material, or 1 wt% to 6 wt%.

In one embodiment, when the core includes natural graphite, the content of the carbon coating may be 3 wt% to 6 wt%. In one embodiment, when the core includes artificial graphite, the content of the carbon coating may be 0.5 wt% to 4 wt%. Within the above range, the output characteristics and cycle life characteristics of the anode active material may be simultaneously improved.

In one embodiment, the carbon coating may have an amorphous structure. The amorphous structure may also include a case where the carbon coating has some degree of crystallinity but is considered amorphous overall. For example, the carbon coating may be relatively amorphous compared to the core.

For example, the carbon coating may include amorphous carbon such as hard carbon, soft carbon, calcined coke, mesophase pitch carbide, etc. In this case, the durability of the anode active material may be increased, thereby further suppressing crack generation caused by charging and discharging or external impact.

According to exemplary embodiments, the anode active material may include single particles, assembled particles, or a mixture thereof. The single particles and the assembled particles may be distinguished based on the morphology of the particles. For example, the assembled particles and the single particles may be identified based on cross-sectional images of the particles obtained using a scanning electron microscope (SEM).

The assembled particles may refer to particles in which a plurality of primary particles are aggregated and observed or regarded as substantially one particle. For example, in the case of the assembled particles, boundaries of the primary particles may be observed in the SEM cross-sectional images.

In one embodiment, the assembled particles may be aggregated with greater than 2, greater than 10, 30 or more, or 50 or more primary particles. In one embodiment, the assembled particles may be aggregated with 500 or less, 300 or less, or 100 or less primary particles.

The single particle may refer to a monolithic particle that is not an aggregate. For example, in the case of the single particle, unlike the assembled particle, boundaries of the primary particles may not be observed in the SEM cross-sectional images.

In one embodiment, the anode active material may include only single particles. Since the single particle has relatively high structural stability, the long-term performance and cycle life characteristics of the lithium secondary battery may be improved.

In one embodiment, the anode active material may include only assembled particles. Since the assembled particles are formed by the aggregation of a plurality of primary particles, they may have relatively high conductivity. Therefore, the output characteristics of the lithium secondary battery may be improved.

In one embodiment, the anode active material may include a mixture of single particles and assembled particles. Accordingly, the energy density and output of the lithium secondary battery may be increased while improving its cycle characteristics.

In some embodiments, when the anode active material includes both single particles and assembled particles, the particle size distribution of the anode active material may have a bi-modal distribution.

For example, the median particle diameter ($D_{50}$) of the single particles and the median particle diameter ($D_{50}$) of the assembled particles may be different from each other. The median particle diameter ($D_{50}$) may refer to the particle diameter at a cumulative volume fraction of 50% in the particle size distribution of the anode active material.

In one embodiment, the median particle diameter of the single particles may be smaller than the median particle diameter of the assembled particles. As the median particle diameter of the single particles is relatively small, the high-rate characteristics may be further improved. In addition, as the median particle diameter of the assembled particles is relatively large, the stability and cycle life characteristics may be further improved.

In one embodiment, the single particles may have a median particle diameter of 7 $\mu$m to 15 $\mu$m. In one embodiment, the assembled particles may have a median particle diameter of 10 $\mu$m to 20 $\mu$m.

In some embodiments, when the anode active material includes both single particles and assembled particles, the particle size distribution of the anode active material may have a monomodal distribution. In this case, the median particle diameter of the anode active material may be in the range of 10 $\mu$m to 16 $\mu$m.

In one embodiment, a ratio of the content of the assembled particles to the content of the single particles may be 0.1 to 20, for example, 1 to 10, or 0.5 to 4. Within the above range, the density of the anode may be further increased, and the cycle characteristics and the output characteristics may be simultaneously improved.

In one embodiment, the anode active material may further include a silicon-based active material.

For example, the silicon-based active material may further include silicon (Si), silicon oxide (SiOx, $0 \leq x \leq 2$), a silicon-metal alloy, or a silicon-carbon composite (Si-C). These may be used alone or in combination of two or more thereof.

The silicon oxide (SiOx, $0 < x < 2$) may include a lithium compound. For example, the SiOx including the lithium compound may be SiOx pretreated with lithium. For example, the SiOx including the lithium compound may include lithium silicate.

In some embodiments, the silicon-carbon composite may include silicon carbide (SiC) formed by mechanically alloying silicon and carbon, or silicon-carbon-based particles having a core-shell structure.

According to exemplary embodiments, the anode active material layer 120 may include pores. For example, the pores may be voids formed between the anode active material particles.

For example, the pores may accommodate the volume expansion of the anode active material. Accordingly, the volume expansion of the anode 130 may be further reduced, and the stress acting within the anode 130 may be mitigated, thereby further suppressing the generation of cracks and short circuits.

In one embodiment, an initial pore volume of the anode active material layer 120 may be 0.15 ml/g to 0.30 ml/g. For example, the pore volume may be a value obtained by dividing the total pore volume (ml) of the anode active material layer 120, measured at a state of charge (SOC) of 0% by the total weight (g) of the anode active material layer 120. The total pore volume of the anode active material layer 120 may be measured using a specific surface area measuring device.

If the pore volume of the anode active material layer 120 is less than 0.15 ml/g, cracks may occur in the anode active material layer 120 due to stress generated during charging and discharging. In addition, the cycle life characteristics of the lithium secondary battery may be relatively reduced.

If the pore volume of the anode active material layer 120 is greater than 0.30 ml/g, the energy density of the anode active material layer 120 may be reduced. Therefore, the output characteristics and the charge and discharge capacities of the lithium secondary battery may be relatively decreased. In addition, the rolling density of the anode active material layer 120 may be lowered, resulting in a reduction in structural stability.

In some embodiments, the increase rate of the pore volume of the anode active material layer 120, measured at a state of charge (SOC) of 100% relative to the initial pore volume, may be 20% or less, and preferably 10% or less. Accordingly, even when the lithium secondary battery is fully charged (fully lithiated), volume expansion may be suppressed, and cycle life characteristics and operational stability may be further improved.

**<Lithium secondary battery>**

According to exemplary embodiments, the secondary battery may include an electrode assembly 150 and a case 160 which houses the electrode assembly 150. The electrode assembly 150 may include a cathode 100, an anode 130, and a separation membrane 140.

The cathode 100 may include a cathode current collector 105 and a cathode active material layer 110 formed on at least one surface of the cathode current collector 105. According to exemplary embodiments, the cathode active material layer 110 may be formed on both surfaces (e.g., upper and lower surfaces) of the cathode current collector 105. For example, the cathode active material layer 110 may be formed on the upper and lower surfaces of the cathode current collector 105, respectively, and may be directly coated on the surface of the cathode current collector 105.

The cathode current collector 105 may include, for example, stainless steel, nickel, aluminum, titanium, copper, or an alloy thereof, and preferably includes aluminum or an aluminum alloy.

The cathode active material layer 110 includes lithium metal oxide as a cathode active material, and according to exemplary embodiments, may include a lithium (Li)-nickel (Ni)-based oxide.

In some embodiments, the lithium metal oxide included in the cathode active material layer 110 may be represented by Formula 1 below.

$$[\text{Formula 1}] \qquad Li_{1+a}Ni_{1-(x+y)}Co_xM_yO_2$$

In Formula 1 above, $\alpha$, x and y may satisfy $-0.05{\leq}a{\leq}0.15$, $0.01{\leq}x{\leq}0.2$, $0{\leq}y{\leq}0.2$, and M may be at least one element selected from the group consisting of Mn, Mg, Sr, Ba, B, Al, Si, Ti, Zr and W. In one embodiment, x and y may satisfy $0.01{\leq}x{\leq}0.20$, $0.01{\leq}y{\leq}0.15$.

Preferably, in Formula 1, M may be manganese (Mn). In this case, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability. For example, cobalt (Co) may be a metal associated with the conductivity or resistance of the lithium secondary battery.

In one embodiment, M includes manganese (Mn), and Mn may be provided as a metal associated with the mechanical and electrical stability of the lithium secondary battery.

Through the above-described interaction between nickel, cobalt and manganese, the capacity, output, low resistance, and cycle life stability of the cathode active material layer 110 may be simultaneously improved.

For example, a cathode slurry may be prepared by mixing the cathode active material with a binder, a conductive material and/or a dispersant in a solvent, followed by stirring them. The cathode current collector 105 may be coated with the cathode slurry, then compressed and dried to prepare the cathode active material layer 110.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as a binder for forming the cathode. In this case, an amount of the binder for forming the cathode active material layer 110 may be reduced and an amount of the cathode active material or lithium metal oxide particles may be relatively increased, thereby improving the output and capacity of the secondary battery.

For example, the conductive material may include carbon-based conductive materials such as graphite, carbon black, carbon nanofibers, carbon nanotubes, and/or metal-based conductive materials such as tin, tin oxide, zinc oxide, titanium oxide, and metal fibers.

In some embodiments, the cathode 100 may have an electrode density of 3.0 to 3.9 g/cc, and preferably 3.2 to 3.8 g/cc.

In some embodiments, the anode active material layer 120 may be formed by applying (coating) the anode composition to the anode current collector 125, followed by compressing (pressing) and drying.

The anode composition may be provided in the form of a slurry, and may include the anode active material, a binder, a conductive material, and a thickener. Materials substantially the same as or similar to those used for forming the cathode 100 may be used as the binder and the conductive material for forming the anode.

In some embodiments, after the anode composition is applied to the anode current collector 125, a magnetic field may be applied to the anode current collector 125 having the anode composition applied thereon.

For example, a pair of magnetic field generating means may be arranged with the anode current collector 125 interposed therebetween. Magnetic field lines may be applied from the magnetic field generating means, and accordingly, the alignment direction of the crystals in the anode active material layer 120 may be changed. Accordingly, the preferred orientation factor of the anode active material layer 120 may be adjusted within the above-described range by controlling the intensity, the application direction and the change direction, etc. of the magnetic field lines.

The magnetic field generating means is not particularly limited as long as it is capable of generating a magnetic field, and for example, an electromagnet or a superconducting magnet may be used.

In some embodiments, after applying a magnetic field to the anode current collector 125, the anode composition applied to the anode current collector 125 may be dried and pressed. The orientation direction of the crystal structure may be fixed during the drying process.

As the drying method, natural drying, heat drying, reduced pressure drying, and air drying may be used, and the drying process may be performed in stages.

In some embodiments, the binder for forming the anode 130 may include, for example, styrene-butadiene rubber (SBR) or an acrylic binder to ensure compatibility with the graphite-based active material, and may be used together with a thickener such as carboxymethyl cellulose (CMC).

In exemplary embodiments, the anode 130 may have a density of 1.0 to 1.9 g/cc.

In some embodiments, the anode 130 may have an area (e.g., a contact area with the separation membrane 140) and/or volume larger than those/that of the cathode 100. In this case, lithium ions generated from the cathode 100 may smoothly migrate to the anode 130 without being precipitated during the process, thereby further improving the output and capacity characteristics of the secondary battery.

The separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane may include a nonwoven fabric made of glass fibers having a high melting point, polyethylene terephthalate fibers, etc.

The separation membrane 140 may extend between the cathode 100 and the anode 130, and may be folded and wound along the thickness direction of the lithium secondary battery. Accordingly, a plurality of cathodes 100 and anodes 130 may be stacked in the thickness direction with the separation membrane 140 interposed between.

According to exemplary embodiments, an electrode cell is defined by the cathode 100, the anode 130, and the separation membrane 140, and a plurality of electrode cells are stacked to form, for example, a jelly-roll type electrode assembly 150. For example, the electrode assembly 150 may be formed by winding, laminating, folding, and the like the separation membrane 140.

The electrode assembly 150 is housed in the case 160, and an electrolyte may be simultaneously injected into the case 160. The case 160 may include, for example, a pouch, a can, or the like in shape.

According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$,

$(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_3)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, $\gamma$-butyrolactone, propylene sulfite, tetrahydrofuran, and the like may be used. These compounds may be used alone or in combination of two or more thereof.

As illustrated in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

In FIG. 2, the cathode lead 107 and the anode lead 127 are shown as being formed on the same side of the lithium secondary battery or the case 160, but they may alternatively be formed on the opposite sides.

For example, the cathode lead 107 may be formed on one side of the case 160, and the anode lead 127 may be formed on the other side of the case 160.

The lithium secondary battery may be manufactured, for example, in a cylindrical shape using a can, a prismatic shape, a pouch shape or a coin shape.

Hereinafter, experimental examples including specific examples and comparative examples are proposed to facilitate understanding of the present invention. However, the following examples are only given for illustrating the present invention and are not intended to limit the appended claims. It will be apparent to those skilled in the art that various alterations and modifications are possible within the scope and spirit of the present invention, and such alterations and modifications are duly included in the appended claims.

## Example 1

### (1) Manufacture of an anode for a lithium secondary battery

Artificial graphite single particles having a median particle diameter (D50) of 14.8 $\mu$m were prepared as an anode active material. The anode active material, styrene butadiene rubber (SBR), and carboxymethyl cellulose (CMC) as a thickener were mixed in a mass ratio of 97.3:1.5:1.2, and then the mixture was dispersed in deionized distilled water to prepare an anode slurry. Subsequently, the slurry was applied to one surface of a copper (Cu) foil current collector.

A magnetic field was applied so as to vertically penetrate the anode active material layer formed on the current collector to which the anode slurry had been applied, thereby performing an orientation process by the magnetic field.

After the orientation process, the current collector was dried and pressed to prepare an anode having a coating amount of 13.0 mg/cm$^2$ (based on cross-section) and a sultry density of 1.7 g/cc.

### (2) Measurement of preferred orientation (P/O) factor

The preferred orientation (P/O) factor was measured using the March-Dollase approach by performing XRD analysis on the surface of the prepared anode active material layer. The XRD analysis was performed under the specific measurement conditions described below, and the orientation factor (r) was measured according to Equation 1 above. The preferred orientation factor was calculated as 1-r.

XRD(X-Ray Diffractometer) Empyrean
Maker: PANalytical
Anode material: Cu
K-Alphal wavelength: 1.540598Å
Generator voltage: 45kV
Tube current: 40mA
Scan Range: 10 to 80°
Scan Step Size: 0.026°
Divergence slit: 1/4°
Antiscatter slit: 1°
Time per step: 100s
The measurement results are shown in Table 1 below.

**(3) Measurement of pore volume (ml/g)**

The pore volume of the anode active material layer was measured by the mercury intrusion method using a mercury porosimeter (AutoPore V 9600). The pore volume (ml/g) was determined by dividing the measured volume (ml) by the total weight (g) of the anode active material layer.

**(4) Manufacture of secondary batteries**

$LiNi_{0.88}Co_{0.10}Mn_{0.02}O_2$ as a cathode active material, CNT as a conductive material and dispersant, and polyvinylidene fluoride (PVDF) as a binder were mixed in a weight ratio of 98.18:0.6:0.12:1.1 to prepare a cathode slurry, which was then applied to an aluminum substrate, followed by drying and pressing the same, to prepare a cathode.
The prepared cathode and anode were disposed with a polyethylene (PE) separation membrane (13 μm) interposed therebetween to form an electrode cell. Then, the electrode cells were stacked to form an electrode assembly. The electrode assembly was housed in a pouch, and the electrode tab portions were fused.
Thereafter, an electrolyte including 1.0 M $LiPF_6$ and a mixed solvent of ethylene carbonate/ethyl methyl carbonate (EC/EMC, 25/75; volume ratio) was prepared. 1 wt% of a cycle life additive (FEC) was added to the prepared electrolyte based on the total weight of the electrolyte. Subsequently, the electrolyte was injected into the electrode assembly and then sealed to manufacture a secondary battery.

**Examples 2 to 12 and Comparative Examples 1 to 6**

Anodes were prepared in the same manner as in Example 1, except that artificial graphite having the types and median particle diameters described in Table 1 below was used as the anode active material.
Among the types in Table 1, "single particle" refers to an artificial graphite single particle, "assembled" refers to an artificial graphite assembled particle, and "mixed" refers to an active material in which artificial graphite single particles and artificial graphite assembled particles are mixed in a weight ratio of 60:40 to 70:30.
The preferred orientation (P/O) factor was adjusted by varying the intensity and direction of the magnetic force lines, and process time during the orientation process, as shown in Table 1 below.
For Examples 8 to 10 and Comparative Example 6, to form a carbon coating on the surface of artificial graphite, heat treatment was performed at 1100°C using soft carbon or hard carbon. The content of the carbon coating remaining after the heat treatment is shown in Table 1 below.

[TABLE 1]

| | | Anode active material | | | Anode active material layer | |
|---|---|---|---|---|---|---|
| | | Type | Median particle diameter (μm) | Carbon coating content (wt%) | P/O factor | SOC 0 pore volume (ml/g) |
| Example 1 | Single particle | 14.8 | 0 | 0.64 | 0.166 | |
| Example 2 | Mixed | 14.4 | 0 | 0.54 | 0.182 | |
| Example 3 | Single particle | 13.6 | 0 | 0.55 | 0.191 | |
| Example 4 | Assembled | 13.0 | 0 | 0.39 | 0.198 | |
| Example 5 | Mixed | 12.4 | 0 | 0.59 | 0.203 | |
| Example 6 | Single particle | 10.5 | 0 | 0.51 | 0.222 | |
| Example 7 | Assembled | 12.6 | 0 | 0.45 | 0.249 | |
| Example 8 | Single particle | 11.0 | 1.0 | 0.45 | 0.223 | |
| Example 9 | Mixed | 13.1 | 1.0 | 0.43 | 0.229 | |
| Example 10 | Assembled | 13.4 | 3.0 | 0.37 | 0.235 | |
| Example 11 | Single particle | 10.9 | 0 | 0.32 | 0.231 | |
| Example 12 | Single particle | 11.1 | 0 | 0.28 | 0.240 | |
| Comparative Example 1 | Single particle | 14.6 | 0 | 0.70 | 0.171 | |
| Comparative Example 2 | Mixed | 14.0 | 0 | 0.72 | 0.188 | |
| Comparative Example 3 | Assembled | 13.6 | 0 | 0.68 | 0.190 | |

(continued)

| | Anode active material | | | Anode active material layer | |
|---|---|---|---|---|---|
| | Type | Median particle diameter (μm) | Carbon coating content (wt%) | P/O factor | SOC 0 pore volume (ml/g) |
| Comparative Example 4 | Mixed | 13.1 | 0 | 0.69 | 0.198 |
| Comparative Example 5 | Single particle | 11.1 | 0 | 0.81 | 0.201 |
| Comparative Example 6 | Assembled | 14.1 | 1.0 | 0.67 | 0.211 |

**Experimental Example 1**

**(1) Evaluation of room-temperature cycle life characteristics**

For the secondary batteries according to the examples and comparative examples, charging (CC/CV, 1C, 4.2V, cut-off 0.05C) and discharging (CC, 1C, 2.5V cut-off) at 25°C were defined as one cycle, and charging/discharging was repeatedly performed at 10-minute intervals. Thereafter, the discharge capacity measured at the 50th cycle was calculated as a ratio (%) relative to the discharge capacity at the first cycle to determine the capacity retention rate.

The evaluation results are shown in Table 2 below.

**(2) Evaluation of high-temperature cycle life characteristics**

For the secondary batteries according to the examples and comparative examples, charging (CC/CV, 1C, 4.2V, cut-off 0.05C) and discharging (CC, 1C, 2.5V cut-off) were performed at 25°C, and the initial discharge capacity was measured.

Thereafter, the secondary batteries were charged to SOC 100% and left to stand at 60°C for 10 weeks. After the storage period, the secondary batteries were discharged (CC, 1C, 2.5V cut-off), and the discharge capacity after storage was measured. The high-temperature stability was evaluated as the percentage obtained by dividing the discharge capacity after storage by the initial discharge capacity.

The evaluation results are shown in Table 2 below.

**(3) Measurement of pore volume increase rate**

For the secondary batteries according to the examples and comparative examples, the pore volume (ml/g) was measured after charging to SOC 100% at 25°C. The pore volume increase rate was evaluated as the percentage obtained by dividing the increase in pore volume by the initial pore volume.

The evaluation results are shown in Table 2 below.

[TABLE 2]

| | Room-temperature cycle life characteristics (%) | High-temperature cycle life characteristics (%) | SOC 100 pore volume (ml/g) | Pore volume increase rate (%) |
|---|---|---|---|---|
| Example 1 | 80.1 | 85.9 | 0.198 | 19.3 |
| Example 2 | 84.0 | 89.9 | 0.201 | 10.4 |
| Example 3 | 83.1 | 88.7 | 0.217 | 13.6 |
| Example 4 | 86.9 | 91.2 | 0.207 | 4.5 |
| Example 5 | 81.9 | 87.9 | 0.237 | 16.7 |
| Example 6 | 84.2 | 90.4 | 0.244 | 9.9 |
| Example 7 | 85.5 | 90.6 | 0.267 | 7.2 |
| Example 8 | 81.8 | 87.1 | 0.241 | 8.1 |
| Example 9 | 81.1 | 89.1 | 0.251 | 9.6 |
| Example 10 | 80.8 | 88.7 | 0.259 | 10.2 |

(continued)

|  | Room-temperature cycle life characteristics (%) | High-temperature cycle life characteristics (%) | SOC 100 pore volume (ml/g) | Pore volume increase rate (%) |
|---|---|---|---|---|
| Example 11 | 80.7 | 86.7 | 0.254 | 10.0 |
| Example 12 | 80.0 | 85.3 | 0.279 | 16.4 |
| Comparative Example 1 | 55.1 | 68.8 | 0.212 | 24.0 |
| Comparative Example 2 | 46.0 | 67.1 | 0.240 | 27.7 |
| Comparative Example 3 | 73.3 | 74.8 | 0.229 | 20.5 |
| Comparative Example 4 | 69.9 | 71.6 | 0.241 | 21.7 |
| Comparative Example 5 | 35.5 | 60.3 | 0.268 | 33.3 |
| Comparative Example 6 | 71.1 | 70.1 | 0.255 | 20.9 |

Referring to Tables 1 and 2, the examples, which included an anode active material layer having a P/O factor of less than 0.67, exhibited improved room-temperature cycle life characteristics and high-temperature cycle life characteristics. In addition, the examples had a pore volume increase rate of 20% or less at full charge.

The comparative examples, which included an anode active material layer having a high P/O factor, exhibited degraded room-temperature cycle life characteristics and high-temperature stability. In addition, the comparative examples also exhibited a high pore volume increase rate at full charge.

**Claims**

1. An anode for a lithium secondary battery comprising:

   an anode current collector; and
   an anode active material layer formed on the anode current collector and comprising an anode active material, wherein the anode active material layer has a preferred orientation (P/O) factor, as determined by the March-Dollase approach, of less than 0.67.

2. The anode for a lithium secondary battery according to claim 1, wherein the preferred orientation factor of the anode active material layer is 0.30 to 0.64.

3. The anode for a lithium secondary battery according to claim 1, wherein the preferred orientation factor of the anode active material layer is calculated as 1 - (minus) an orientation factor (r), and the orientation factor (r) is obtained by Equation 1 below:

[Equation 1]

$$P_k = (r^2 \cos^2 \alpha + \frac{1}{r} \sin^2 \alpha)^{-3/2}$$

(in Equation 1 above, r is the orientation factor, $\alpha$ is a diffraction angle of X-rays for the anode active material layer measured by X-ray diffraction analysis (XRD), and $P_k$ is a value obtained by Equation 2 below).

[Equation 2]

$$Y_{ci} = S \sum_k L_k |F_k|^2 \emptyset(2\theta - 2\theta_k) P_k A + Y_{bi}$$

(in Equation 2 above, $\theta$ is an incident angle of the X-ray at which the diffraction angle $\alpha$ appears, $\theta_k$ is a reflection angle of the X-ray incident at the angle of $\theta$,
$Y_{ci}$ is a diffraction intensity at $2\theta$ calculated by the Rietveld refinement method using the X-ray diffraction profile of the anode active material layer,

$Y_{bi}$ is a background intensity,

S is a scale factor, $L_k$ is a Lorenz factor, and $F_k$ is a structure factor,

Ø is a reflection intensity of the X-ray at 2θ measured by XRD for the anode active material layer, and A is an absorption factor).

4. The anode for a lithium secondary battery according to claim 1, wherein the preferred orientation plane of the anode active material layer is a crystal plane corresponding to a c-axis direction of the anode active material.

5. The anode for a lithium secondary battery according to claim 1, wherein the anode active material comprises artificial graphite, natural graphite or a mixture thereof.

6. The anode for a lithium secondary battery according to claim 1, wherein the anode active material comprises single particles.

7. The anode for a lithium secondary battery according to claim 1, wherein the anode active material comprises assembled particles in which a plurality of primary particles are aggregated.

8. The anode for a lithium secondary battery according to claim 1, wherein the anode active material comprises single particles and assembled particles in which a plurality of primary particles are aggregated.

9. The anode for a lithium secondary battery according to claim 8, wherein the anode active material has a bi-modal distribution.

10. The anode for a lithium secondary battery according to claim 8, wherein the single particles have a median particle diameter of 7 $\mu$m to 15 $\mu$m, and the assembled particles have a median particle diameter of 10 $\mu$m to 20 $\mu$m.

11. The anode for a lithium secondary battery according to claim 8, wherein a ratio of a content of the assembled particles to a content of the single particles is 0.5 to 4.

12. The anode for a lithium secondary battery according to claim 1, wherein the anode active material comprises a core and a carbon coating formed on the core.

13. The anode for a lithium secondary battery according to claim 12, wherein a content of the carbon coating is 0.5% by weight to 10% by weight based on a total weight of the anode active material.

14. The anode for a lithium secondary battery according to claim 1, wherein the anode active material layer comprises pores formed between anode active material particles,

wherein a pore volume of the anode active material layer is 0.15 ml/g to 0.30 ml/g.

15. A lithium secondary battery comprising:

the anode for a lithium secondary battery according to claim 1; and

a cathode disposed opposite to the anode for the lithium secondary battery.

[FIG. 1]

107    127

I

150

160

I'

[FIG. 2]

140

110
105  }100
110

120
125  }130
120

160

## INTERNATIONAL SEARCH REPORT

| International application No. |
| --- |
| **PCT/KR2023/006599** |

### A. CLASSIFICATION OF SUBJECT MATTER

**H01M 4/133**(2010.01)i; **H01M 4/36**(2006.01)i; **H01M 4/583**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/133(2010.01); C01B 32/05(2017.01); C01B 32/20(2017.01); C01B 32/205(2017.01); H01M 10/052(2010.01); H01M 10/0525(2010.01); H01M 4/1393(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극(negative electrode), 활물질(active material), 우선 배향(preferred orientation), 코어(core), 탄소 코팅(carbon coating), 바이모달(bimodal)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2022-0060017 A (SK ON CO., LTD.) 11 May 2022 (2022-05-11)<br>See paragraphs [0002], [0030]-[0034], [0044]-[0049], [0068], [0098] and [0112]-[0117]; and tables 1 and 2. | 1-2,4-5,14-15 |
| Y | | 6-13 |
| A | | 3 |
| Y | KR 10-2019-0076706 A (SAMSUNG SDI CO., LTD.) 02 July 2019 (2019-07-02)<br>See paragraphs [0121] and [0128]-[0131]. | 6-13 |
| A | KR 10-2022-0044175 A (SK ON CO., LTD.) 06 April 2022 (2022-04-06)<br>See claims 1 and 3. | 1-15 |
| A | KR 10-1972235 B1 (DAEGU GYEONGBUK INSTITUTE OF SCIENCE AND TECHNOLOGY) 23 August 2019 (2019-08-23)<br>See entire document. | 1-15 |

☑ Further documents are listed in the continuation of Box C.  ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 August 2023** | **17 August 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/006599**

| C. | DOCUMENTS CONSIDERED TO BE RELEVANT | |
|---|---|---|
| Category* | Citation of document, with indication, where appropriate, of the relevant passages | Relevant to claim No. |
| A | US 2015-0030931 A1 (TAKAHATA, Koji et al.) 29 January 2015 (2015-01-29)<br>See entire document. | 1-15 |

Form PCT/ISA/210 (second sheet) (July 2022)

# EP 4 614 587 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| KR | 10-2022-0060017 | A | 11 May 2022 | CN | 114447277 | A | 06 May 2022 |
| | | | | EP | 3993088 | A1 | 04 May 2022 |
| | | | | JP | 2022-074139 | A | 17 May 2022 |
| | | | | KR | 10-2023-0062494 | A | 09 May 2023 |
| | | | | KR | 10-2527051 | B1 | 02 May 2023 |
| | | | | US | 2022-0140343 | A1 | 05 May 2022 |
| | | | | US | 2022-0149371 | A1 | 12 May 2022 |
| KR | 10-2019-0076706 | A | 02 July 2019 | CN | 109962213 | A | 02 July 2019 |
| | | | | CN | 109962213 | B | 05 July 2022 |
| | | | | EP | 3503267 | A1 | 26 June 2019 |
| | | | | EP | 3503267 | B1 | 20 January 2021 |
| | | | | KR | 10-2519441 | B1 | 07 April 2023 |
| | | | | US | 11217783 | B2 | 04 January 2022 |
| | | | | US | 2019-0198857 | A1 | 27 June 2019 |
| KR | 10-2022-0044175 | A | 06 April 2022 | KR | 10-2021-0130062 | A | 29 October 2021 |
| | | | | KR | 10-2436898 | B1 | 25 August 2022 |
| KR | 10-1972235 | B1 | 23 August 2019 | None | | | |
| US | 2015-0030931 | A1 | 29 January 2015 | CN | 103988344 | A | 13 August 2014 |
| | | | | CN | 103988344 | B | 09 November 2016 |
| | | | | DE | 112011105960 | T5 | 25 September 2014 |
| | | | | US | 9911972 | B2 | 06 March 2018 |
| | | | | WO | 2013-088540 | A1 | 20 June 2013 |

Form PCT/ISA/210 (patent family annex) (July 2022)

**EP 4 614 587 A1**

**Patent documents cited in the description**

- KR 1020170099748